# EUROPÄISCHE PATENTSCHRIFT

(11) **EP 0 863 818 B1**
(45) Veröffentlichungstag und Bekanntmachung des Hinweises auf die Patenterteilung: **22.09.1999**
(21) Anmeldenummer: 96946171.4
(22) Anmeldetag: 28.11.1996
(51) Int. Cl.: B60N 2/00

(54) **VORRICHTUNG ZUR LÖSBAREN VERBINDUNG EINES FAHRZEUGSITZES MIT DEM FAHRZEUGBODEN**
DEVICE FOR SECURING A VEHICLE SEAT NON-PERMANENTLY TO THE VEHICLE FLOOR
DISPOSITIF DE FIXATION AMOVIBLE D'UN SIEGE AU PLANCHER D'UN VEHICULE

(30) Priorität: 01.12.1995 DE 19544833
(43) Veröffentlichungstag der Anmeldung: 16.09.1998
(73) Patentinhaber: Brose Fahrzeugteile GmbH & Co. KG, 96450 Coburg (DE)
(72) Erfinder: SCHECK, Georg, D-96479 Weitramsdorf (DE); RAMPEL, Hans, D-96482 Schorkendorf (DE); KLIPPERT, Uwe, D-36280 Oberaula (DE); ALT, Christian, D-96450 Coburg (DE)
(74) Vertreter: Müller, Wolfram Hubertus, Dipl.-Phys.
(86) Internationale Anmeldenummer: DE9602327
(87) Internationale Veröffentlichungsnummer: WO9719829

(56) Entgegenhaltungen:
- EP-A- 0 537 078
- EP-A- 0 609 130
- EP-A- 0 618 102
- DE-A- 4 404 935
- DE-C- 4 408 686
- US-A- 4 495 887
- US-A- 5 238 285
- US-A- 5 282 662

## Beschreibung

Die Erfindung betrifft eine Vorrichtung zur lösbaren Verbindung eines Fahrzeugsitzes gemäß dem Oberbegriff des Patentanspruchs 1 (siehe zum Beispiel US-A-5 282 662). Sie gewährleistet eine sichere Verriegelung und bei Bedarf eine einfache Entriegelung des Fahrzeugsitzes.

Aus der DE-A1 44 04 935 ist eine Vorrichtung zum Verbinden eines Fahrzeugsitzes mit einem Fahrzeugboden bekannt, die zur Verriegelung des Sitzes mit einem Bolzen des vorderen Lagerbocks einen zweiarmigen Verriegelungshebel und zur Verriegelung mit dem Bolzen des hinteren Lagerbocks einen in Fahrtrichtung offenen Haken einsetzt. Der zweiarmige Verriegelungshebel wird in der entriegelten Position durch eine Feder in einem Anschlag gehalten, wobei das freie Ende des einen Arms einem am Fahrzeugboden befestigten Anschlag zugeordnet ist. Nach dem Einsetzen der Befestigungsstelle des Fahrzeugsitzes in die bodenseitigen Lagerböcke wird der Sitz zur Herstellung der formschlüssigen Verriegelung nach vorne geschoben, wobei der hintere Befestigungsbolzen zwischen die Flanken des hinteren Befestigungshakens eindringt. Gleichzeitig gleitet der Sitz vorne auf einer Führungskulisse eines Stützblechs, daß auch den zweiarmigen Verriegelungshebel trägt, schräg nach unten. Dabei kommt es zum Eingriff der bodenseitigen Abstützung mit dem einen Arm des Verriegelungshebels und zu dessen Schwenken in Richtung der Verriegelungsposition. Bei Erreichen eines gewissen Schwenkwinkels kehrt sich die Wirkrichtung der Feder auf das Verriegelungselement um, wodurch dieses automatisch in die Verriegelungsposition gezogen wird.

Die beschriebene Vorrichtung ermöglicht zwar eine einfache Ver- und Entriegelung eines Fahrzeugsitzes, sie besitzt jedoch den Nachteil, daß die hintere Verriegelungsstelle in Form eines offenen Hakens gestaltet ist und Kräfte entgegen der Fahrtrichtung nicht aufnehmen kann. Im Falle eines Heckcrashs mußte die vordere Verriegelungsstelle die gesamte damit verbundene Energie ableiten. Darüber hinaus kann nicht vollkommen ausgeschlossen werden, daß der Sitz im vorderen Lagerbock verriegelt wird, während der hintere Befestigungshaken den Befestigungsbolzen nicht umschließt, sondern auf diesem aufsteht. Ein derart ungesicherter Sitz birgt ein erhebliches Unfall- und Verletzungsrisiko.

Die DE 44 08 686 C1 beschreibt eine Vorrichtung zum Verbinden eines Längsträgers eines Fahrzeugsitzes mit der Fahrzeugstruktur, wobei eine nach hinten offene Befestigungsklaue einen karosseriefesten Befestigungsbolzen umgreift, so daß auch heckseitig verursachte Crashkräfte aufgenommen werden können. Nachdem der hintere Befestigungsbereich in formschlüssigen Eingriff gebracht wurde, kann die vordere Befestigungsklaue auf den zugeordneten Befestigungsbolzen abgesenkt und mittels eines Verriegelungselements gesichert werden.

Von Nachteil ist jedoch, daß eine Verriegelung des vorderen Sitzbereichs auch dann erfolgen kann, wenn der hintere Befestigungsbereich auf dem karosserieseitigen Befestigungsbolzen aufliegt, d.h. wenn keine hintere Verriegelung besteht. Eine solche Fehlmontage kann beim Betrieb des Kraftfahrzeugs, insbesondere bei starken negativen Beschleunigungen, zum Vorklappen des Sitzes und somit zu schweren Verletzungen des Benutzers führen.

Aus der US-A 5,282,662 ist eine Vorrichtung zur lösbaren Verbindung eines Fahrzeugsitzes mit dem Fahrzeugboden bekannt, die zwei vordere und hintere Führungskulissen aufweist, in die jeweils Befestigungsbolzen eingreifen. Durch Befestigungshaken wird der Fahrzeugsitz an den Befestigungsbolzen befestigt bzw. mit diesen verriegelt. Darüber hinaus weist die Vorrichtung eine Stange auf, die einen Abstützfuß mit einem Bein des Fahrzeugsitzes verbindet. Zum Herausnehmen des Fahrzeugsitzes wird dieser in eine vertikale Position geklappt, wobei sich die hinteren Führungskulissen (bzw. Beine des Sitzes) wegen der Verbindung mit dem Abstützfuß über die Stange zusammenfalten.

In der EP 0 609 130 A1 ist eine Vorrichtung zur lösbaren Verbindung eines Fahrzeugsitzes mit dem Fahrzeugboden beschrieben, die einen hinteren Befestigungshaken aufweist, der in einen fahrzeugbodenseitigen Befestigungsbolzen eingreift. Eine vordere Führungskulisse dient zur Abstützung des Fahrzeugsitzes auf einem vorderen Befestigungsbolzen. Dem hinteren Befestigungsbolzen ist ein schwenkbar gelagertes, klauenartiges Primär-Verriegelungselement zugeordnet, das von einer Federkraft entgegen der Verriegelungsposition beaufschlagt ist. Dieses Primär-Verriegelungselement ist durch ein Sekundär-Verriegelungselement in Form eines Fußhebels ent- und verriegelbar.

Eine weitere Vorrichtung zur lösbaren Befestigung eines Fahrzeugsitzes ist aus der EP 0 618 102 A1 bekannt.

Auch bei diesen Vorrichtungen kann jedoch eine Verriegelung des vorderen Sitzbereichs erfolgen, selbst wenn der hintere Befestigungsbereich nicht ordungsgemäß verriegelt ist.

Der Erfindung liegt deshalb die Aufgabe zugrunde, eine Vorrichtung zur lösbaren Verriegelung eines Fahrzeugsitzes mit dem Boden eines Kraftfahrzeugs zur Verfügung zu stellen, die eine einfache und zugleich sichere Ver- bzw. Entriegelung des Fahrzeugsitzes gewährleistet.

Erfindungsgemäß wird die Aufgabe durch die kennzeichnenden Merkmale des Patentanspruchs 1 gelöst. Die Unteransprüche geben Vorzugsvarianten der Erfindung an.

Erfindungsgemäß sind die Verriegelungsvorgänge von vorderer und hinterer Verriegelungsvorrichtung durch ein Koppelelement, zum Beispiel eine Koppelstange, miteinander verbunden, wobei die für die Schwenkbewegungen des vorderen Verriegelungselements und des Sekundär-Verriegelungselements erforderliche Kraft von einem gemeinsamen Federelement aufgebracht wird. Dadurch kann sichergestellt werden, daß eine Verriegelung des Sitzes mit dem vorderen Befestigungsbolzen nur erfolgen kann, wenn die hintere Sitzverriegelung ordnungsgemäß abgeschlossen ist.

Um einen noch höheren Sicherheitsstandard zu erzielen, wird die zuletzt beschriebene Ausführungsform um ein Sperrelement ergänzt, das die Auslösung des Verriegelungsvorganges am vorderen Befestigungsbolzen nicht zuläßt, falls der Befestigungsbolzen noch nicht den vorgesehenen Bereich der Kulisse des vorderen Stützblechs erreicht hat. Das ebenfalls schwenkbare und von einer Feder beaufschlagte Sperrelement verhindert durch Abstützung des Sperrelements dessen Verriegelungsbewegung, bis das Sperrelement vom Befestigungsbolzen gegen die Federkraft aus dem Überdeckungsbereich der Kulisse verdrängt ist.

Die zusätzliche Verwendung eines Primär-Verriegelungselements, dessen Position bei Erreichen des Verriegelungszustandes durch ein Sekundär-Verriegelungselement arretiert wird, sichert den Befestigungsbolzen in der einseitig offenen Kulisse des hinteren Befestigungshakens. Dadurch wird verhindert, daß die hintere Sitzbefestigung unwirksam werden kann, insbesondere infolge eines Heckcrashs, bei dem die Bodengruppe kurzzeitig elastisch oder auch plastisch verformt wird. Durch die enormen elastischen Verspannungen, die dabei im Sitzgestell auftreten, würde der Sitz anschließend nach vorne geschleudert, wobei er um die vorderen Befestigungsstellen schwenkt. Das dabei auftretende Verletzungsrisiko kann erheblich sein.

In einer Vorzugsvariante der Erfindung ist das klauenartige, schwenkbar gelagerte Primär-Verriegelungselement von einem Federelement entgegen der Verriegelungsrichtung beaufschlagt und von einem Sekundärelement zunächst in einer Position gehalten, die den Eingang zur Kulisse des Befestigungshakens übergreift. So gelangt bei der Montage des Sitzes an den Fahrzeugboden der Befestigungshaken zunächst in die Klaue des Primär-Verriegelungselements und erst in der Folge in die Kulisse des Befestigungshakens. Bei Erreichen der vorgesehenen verriegelungsposition arretiert das Sekundär-Verriegelungselement die Lage des Primär-Verriegelungselements und somit auch die Lage des Befestigungsbolzens in der Kulisse des Befestigungshakens. Vorzugsweise ist auch das Sekundär-Verriegelungselement federbelastet, so daß der Verriegelungsprozeß praktisch automatisch und sicher abläuft.

Somit steht eine Vorrichtung zur lösbaren Verriegelung eines Fahrzeugsitzes mit dem Fahrzeugboden zur Verfügung, die neben einer wesentlich erhöhten Heckcrashsicherheit und einer einfachen Handhabbarkeit auch eine hohe Sicherheit gegen eine eventuelle Fehlverriegelung aufweist. Sowohl im vorderen wie auch im hinteren Bereich kann die Verriegelung nur erfolgen, wenn beide Befestigungsbolzen die vorgeschriebene Sollposition eingenommen haben. Der Verriegelungszustand kann in einfacher Weise durch Überprüfung der Lage des leicht zugänglichen Handgriffs am vorderen Verriegelungselement festgestellt werden.

Mittels dieses Handgriffs ist ebenfalls ein einfaches Lösen der vorderen und hinteren Verriegelung möglich. Nachdem der Handgriff nach oben gezogen wurde, fällt das Sperrelement wieder vor das Verriegelungselement in den Kulissenbereich des Stützblechs.

Durch eine Verschiebung des Sitzes nach hinten gibt auch der hintere Befestigungshaken den betreffenden Befestigungsbolzen frei. Der Sitz kann nun aus den Lagerböcken des Fahrzeugbodens herausgehoben werden.

Nachfolgend wird die Erfindung anhand von zwei Ausführungsbeispielen und der dargestellten Figuren erläutert.

Es zeigen:
- Figur 1a -: Schematische Seitenansicht eines Sitzuntergestells mit offenen Verriegelungen vorne und hinten, die über eine Koppelstange in Verbindung stehen, nach dem Einsetzen des Sitzuntergestells in die Lagerböcke des Fahrzeugbodens;
- Figur 1b -: wie Figur 1a, jedoch während des Verriegelungsvorgangs;
- Figur 1c -: wie Figur 1a, jedoch nach Abschluß des Verriegelungsvorgangs;
- Figur 2a -: schematische Seitenansicht eines Sitzgestells nach dem Einsetzen in die Lagerböcke des Fahrzeugbodens und mit Verriegelungselementen analog Figur 1, jedoch mit einem zusätzlichen Sperrelement für das vordere Verriegelungselement;
- Figur 2b -: wie Figur 2a, jedoch während des Verriegelungsprozesses;
- Figur 2c -: wie Figur 2a, jedoch nach Abschluß des Verriegelungsprozesses.

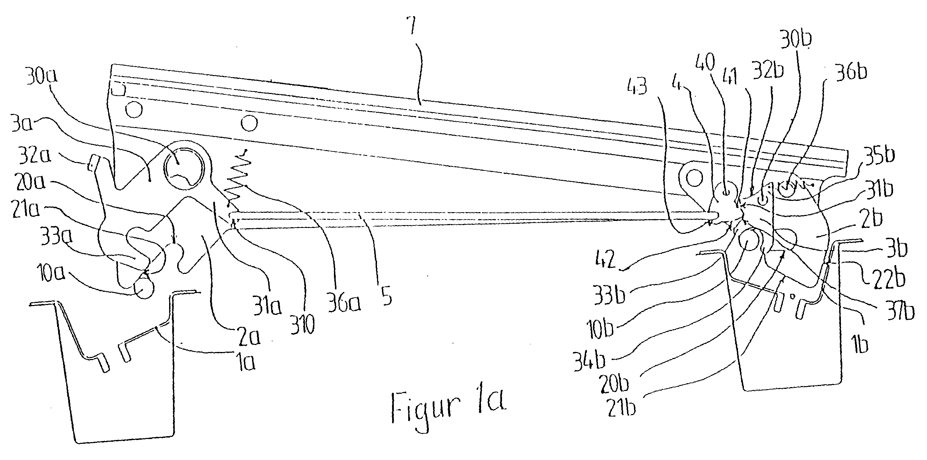

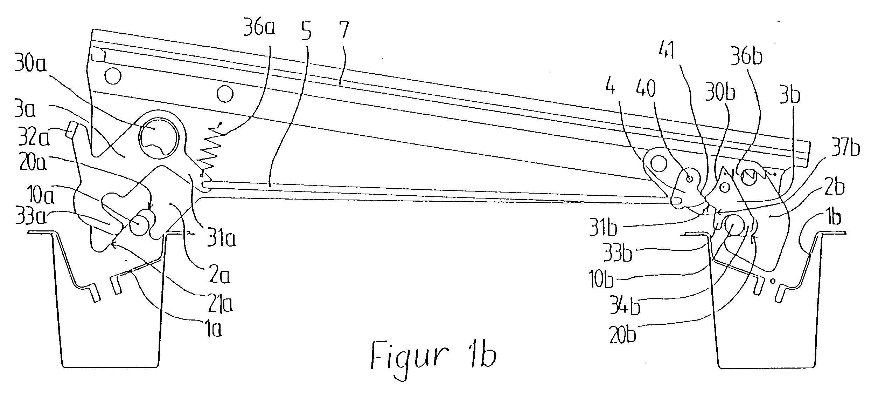

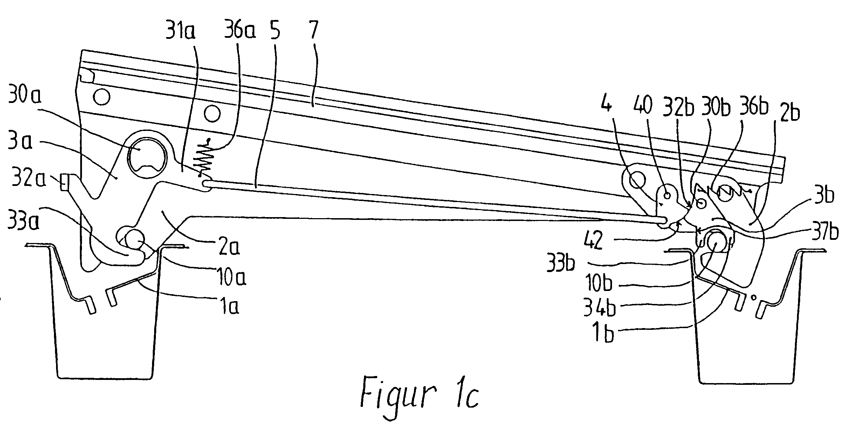

Die Seitenansicht von Figur 1a zeigt schematisch den Aufbau eines Sitzuntergestells, dessen Verriegelungselemente den Fahrzeugsitz über die zu den Lagerböcken 1a, 1b gehörenden Befestigungsbolzen 10a, 10b mit dem Fahrzeugboden verbinden. Die schematische Darstellung des Sitzgestells beschränkt sich im wesentlichen auf die Führungsschiene 7, die formschlüssig und verschieblich mit einer an einem (nicht dargestellten) Sitzobergestell montierten Führungsschiene in Eingriff steht, und das Stützblech 2a, das einerseits mit seiner Kulisse 20a Teil der vorderen Verriegelung ist und andererseits das Verriegelungselement 3a in der Schwenkachse 30a trägt.

Die hintere Sitzbefestigung weist einen Befestigungshaken 2b mit einer nach vorne offenen Kulisse 20b für den Befestigungsbolzen 10b auf. Zunächst ist jedoch der Eingang zur Kulisse 20b von den Klauen 33b, 34b des Primar-Verriegelungselements 3b versperrt, das von einer Zugfeder 36b mit seinen Anschlag 37b gegen das Sekundär-Verriegelungselement gedrückt wird. Dazu greift die Zugfeder 36b derart an einen dem Klauenbereich gegenüberliegendem Arm 35b an, daß die Klaue 33b, 34b in Richtung der Öffnung der Kulisse 20b gezogen wird. In der dargestellten Position von Primär- und Sekundär-Verriegelungselement 3b, 4 gelangt der hintere Befestigungsbolzen 10b beim Absetzen des Sitzes in die Lagersockel 1a, 1b automatisch zwischen die klauenbildenden Anschläge 33b, 34b des Primär-Verriegelungselements, und zwar auch dann, wenn der Sitz ungenau abgesetzt wird und zunächst mit der Kante 21b des Befestigungshakens 2b auf den Befestigungsbolzen 10b auftrifft oder mit der Kante 22b an den Lagerblock 1b anschlägt.

In dieser Ausgangsposition liegt der vordere Befestigungsbolzen 10a am Anschlag 21a an, der direkt in die Kulisse 20a mündet. Eine verriegelnde Schwenkbewegung des Verriegelungselements 3a darf jedoch jetzt noch nicht erfolgen, da der Haken 33a den Bolzen 10a in dieser Position noch nicht erfassen kann. Zwar übt eine am Arm 31a angreifende und im Stützblech 2a eingehängte Zugfeder 36a eine entsprechend gerichtete Kraft auf das Verriegelungselement 3a aus, jedoch wird die Schwenkbewegung durch eine Koppelstange 5 gesperrt, die einerseits über ihre vordere Einhängung 310 mit dem Arm 31a und andererseits über ihre hintere Einhängung gelenkig mit dem Sekundär-Verriegelungselement verbunden ist. Durch die Koppelstange 5 werden also nicht nur die kinematischen Abläufe der vorderen und hinteren Verriegelungselemente koordiniert, sondern es wird auch die für die Funktionstüchtigkeit der erfindungsgemäßen Vorrichtung notwendige Federkraft der Zugfeder 36a zum Sekundär-Verriegelungselement 4 weitergeleitet.

Figur 1b zeigt eine weitere Phase des Montage- bzw. Verriegelungsprozesses, in der das Sitzgestell um eine gewisse Strecke nach vorne verschoben wurde. Deutlich zu erkennen ist, daß dabei der Befestigungsbolzen 10b gegen den Anschlag 34b drückt. Die damit verbundene Schwenkbewegung des Primär-Verriegelungselements 3b um die Achse 30b führt zu einer Verstärkung der Spannung der zwischen Sitzgestell und Arm 35b eingehängten Feder 36b.

Zu erkennen ist auch, daß sich die Position des vorderen Verriegelungselements 3a bis zu dieser Phase des Montageprozesses noch nicht verändert hat, obwohl der vordere Befestigungsbolzen 10a schon fast bis zur Hälfte in die Kulisse 20a vorgedrungen ist; er befindet sich jedoch noch nicht in seiner Sollposition. Durch die ebenfalls unveränderte Lage des Sekundär-Verriegelungselements 4 werden auch Bewegungen aller anderen daran gekoppelten Elemente 3a, 5 blockiert. Dies erfolgt so lange, wie der Anschlag des Sekundär-Verriegelungselements 4 vom Kurvenabschnitt 31b des Primär-Verriegelungselements 30 nicht freigegeben und eine Drehung um die Achse 40 blockiert wird. Die Kontur des Kurvenabschnitts 31b liegt vorzugsweise auf einem Kreisbogen um die Achse 30b.

Figur 1c zeigt die Vorrichtung im vollständig verriegelten Zustand, bei dem beide Befestigungsbolzen 10a, 10b ihre vorgesehenen Positionen in den Kulissen 20a, 20b eingenommen und die Verriegelungselemente 3a, 3b diese Positionen verriegelt haben.

Die mit der (gegenüber Figur 1b) weiteren Vorverlagerung des Sitzes verbundene Schwenkbewegung des Primär-Verriegelungselements 3b führt schließlich dazu, daß der Kurvenabschnitt 31b nicht mehr mit dem Anschlag 41 in Eingriff steht und so eine von der Feder 36a angetriebene und von der Koppelstange 5 übertragene Schwenkbewegung zur Drehung des Sekundär-Verriegelungselements 4 führt. Dabei schwenkt das Sekundär-Verriegelungselement 4 mit seinem Kurvenabschnitt 42 in einen paßfähigen Kurvenabschnitt 32b des Primär-Verriegelungselements 3b, wodurch eine Rückstellbewegung des Befestigungsbolzens 10b beziehungsweise des Primär-Verriegelungselements 3b sicher verhindert wird. Die Position des Primär-Verriegelungselements 3b ist praktisch durch das Sekundär-Verriegelungselement 4 verriegelt. Um einen günstigen Kraftschluß im Falle eines Heckcrashs zu gewährleisten, sollten der Anschlag 33b für den Bolzen 10b, die Überdeckungsfläche der Kurvenabschnitte 32b, 42 und die Schwenkachse 40 in etwa auf einer Linie liegen.

Gleichzeitig mit der Schwenkbewegung des Sekundär-Verriegelungselements 4 erfolgt die den Bolzen 10a verriegelnde Schwenkbewegung des Verriegelungselements 3a. Dabei gelangt der Handgriff 32a in eine Position, die zur Kontrolle der ordnungsgemäßen Verriegelung benutzt werden kann. Durch ein erneutes Anheben des Handgriffs 32a wird die Verriegelung vorne direkt und hinten indirekt durch Zurückschwenken des Sekundär-Verriegelungselements 4 über die Koppelstange gelöst. Mit Unterstützung der Feder 36b kann nun der Sitz nach hinten geschoben werden, wobei die Klaue 33b, 34b des nach vorne schwenkenden Primär-Verriegelungselements 3b den Befestigungsbolzen allmählich frei gibt. So gelangen der Sitz und seine Verriegelungselemente in eine Position, wie sie in Figur 1a dargestellt ist. Der Sitz kann nun problemlos aus den Lagerböcken 1a, 1b herausgehoben werden.

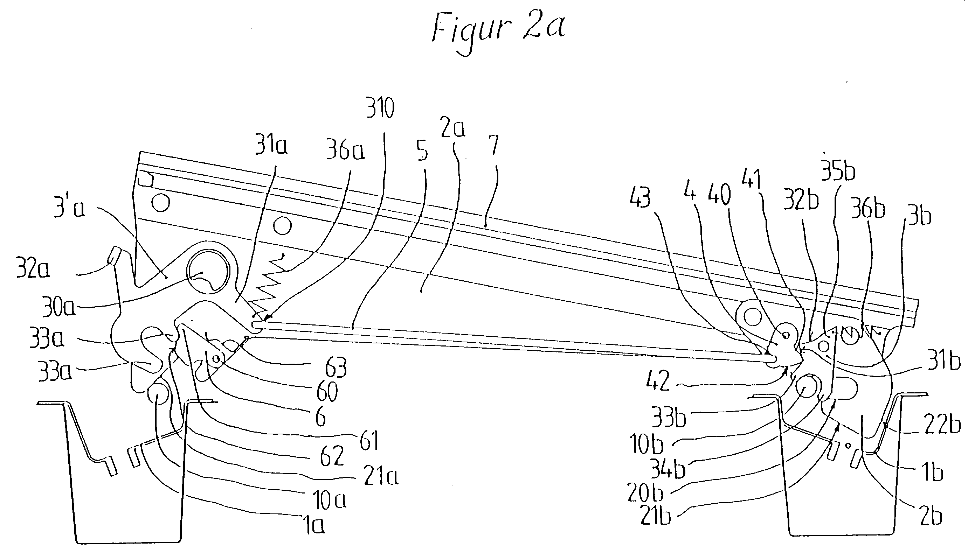

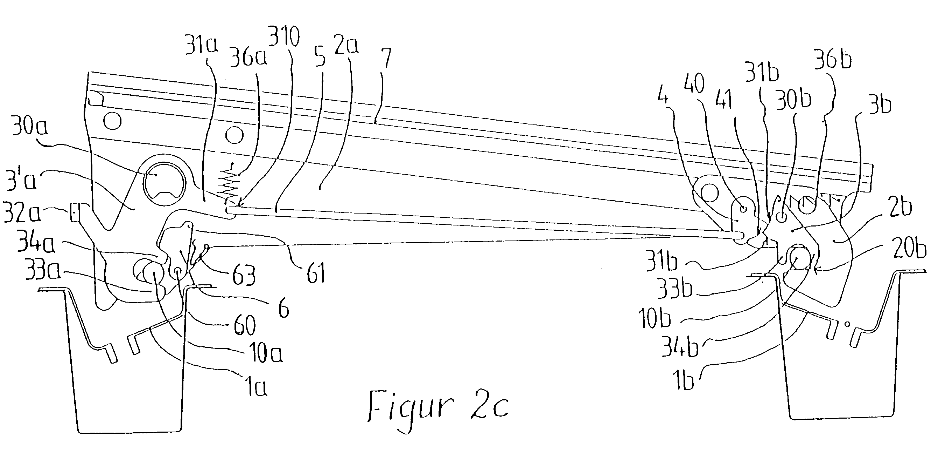

Die Figuren 2a bis 2c zeigen eine Weiterentwicklung der voranbeschriebenen Ausführungsvariante in analogen Sequenzen des Montageprozesses, die durch die Ergänzung um ein Sperrelement 6 einen erhöhten Sicherheitsstandard aufweist. Es gewährleistet, daß auch die Verriegelung des vorderen Befestigungsbolzens 10a nur erfolgen kann, wenn der Bolzen 10a die vorgeschriebene Verriegelungsposition eingenommen hat. Die Freigabe des von der Feder 36b vorgespannten Primär-Verriegelungselements 3b durch das Sekundär-Verriegelungselement 4 kann für sich allein noch nicht zum Einschwenken des vorderen Verriegelungselements 3'a im Bereich der Kulisse 20a führen.

Das Sperrelement 6 lagert mit seinem dem Verriegelungselement 3'a abgewandten Ende schwenkbar am Stützblech 2a und überdeckt vor Beginn des Verriegelungsvorganges (siehe Figur 2a) den größten Teil der Kulisse 20a, wobei das freie Ende mit dem Kurvenabschnitt 62 und der Nase 61 in Eingriff mit dem vorspringenden Anschlag 34a des Verriegelungselement 3'a steht und dieses gegen das Einschwenken abstützt. Eine Feder 63 drückt die Anschläge 34a und 61 gegeneinander. Selbst wenn die vorgesehene Verriegelungsposition des hinteren Befestigungsbolzens 10b in der Kulisse 20b eingenommen sein worden sollte, kann dessen Verriegelung durch das Sekundär-Verriegelungselement 3b und die Verriegelungsbewegung des vorderen Verriegelungselements 3'a nicht erfolgen. Schon bei mäßiger Beanspruchung des Sitzes, zum Beispiel durch Rütteln an der Sitzlehne würde offenkundig, daß der Sitz unverriegelt ist. Außerdem kann anhand der Lage des Handgriffs 32a darauf geschlossen werden, ob die Sitzverriegelung ordnungsgemäß abgeschlossen ist oder nicht.

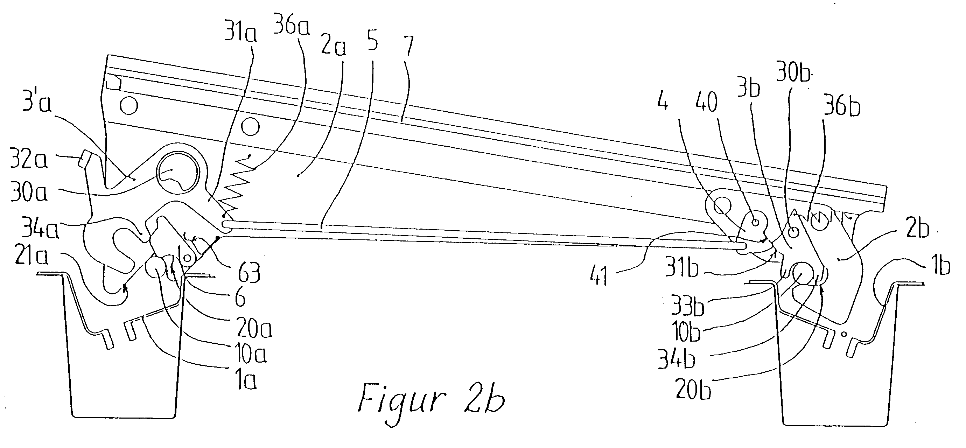

Sofern während des Montageprozesses der Kontakt des vorderen Befestigungsbolzens 10a mit dem Anschlag 21a des Stützblechs 2a aufrecht erhalten wird, verdrängt der Bolzen 10a bei einer Vorverlagerung des Sitzes (siehe Figur 2b) das Sperrelement 6 allmählich aus dem Bereich der Kulisse 20a. Dabei gleitet der vorspringende Anschlag 34a auf dem Kurvenabschnitt 62; die Lage des Verriegelungselements 3'a bleibt unverändert.

Die Verriegelungsmechanismen sind vorzugsweise derart aufeinander abgestimmt, daß der Kurvenabschnitt 31b bezüglich des Anschlags 41 im hinteren Verriegelungsbereich sowie der Kurvenabschnitt 62 und der Anschlag 34a im vorderen Verriegelungsbereich etwa gleichzeitig während des Montageprozesses außer Eingriff treten. Die Feder 36a treibt den Verriegelungsvorgang an, wobei der Anschlag 34a das Sperrelement 6 weiter gegen die Feder 63 drückt und der hakenförmige Anschlag 33a den Befestigungsbolzen 10a untergreift.

Beim Entriegeln des Sitzes fällt das Sperrelement 6 wieder vor das Verriegelungselement 3'a. Im übrigen gilt das für die Figuren 1a bis 1c Gesagte.

### Bezugszeichenliste

- 1a: Lagerbock, vorne
- 1b: Lagerbock, hinten
- 10a: Befestigungsbolzen, vorne
- 10b: Befestigungsbolzen, hinten
- 2a: Stützblech
- 2b: Befestigungshaken
- 20a: Kulisse, vorne
- 20b: Kulisse, hinten
- 21a: Anschlag
- 21b: Kante
- 22b: Kante
- 3a: Verriegelungselement mit Handgriff, vorne
- 3'a: Verriegelungselement mit Handgriff, vorne
- 3b: Primär-Verriegelungselement
- 30a: Schwenkachse
- 30b: Schwenkachse
- 31a: Arm
- 31b: Kurvenabschnitt
- 32a: Handgriff
- 32b: Kurvenabschnitt
- 33a: Haken
- 33b: Anschlag
- 34b: Anschlag
- 35b: Arm
- 36a: Zugfeder
- 36b: Zugfeder
- 310: Einhängung
- 37b: Anschlag
- 4: (Sekundär-) Verriegelungselement
- 40: Schwenkachse
- 41: Anschlag
- 42: Kurvenabschnitt
- 43: Einhängung der Koppelstange, hinten
- 5: Koppelstange
- 6: Sperrelement
- 60: Schwenkachse
- 61: Nase
- 62: Kurvenabschnitt
- 63: Druckfeder (Blattfeder)
- 7: Führungsschiene

## Patentansprüche

1. Vorrichtung zur lösbaren Verbindung eines Fahrzeugsitzes mit dem Fahrzeugboden mit einem hinteren, offenen Befestigungshaken (2b), in den ein fahrzeugbodenseitiger Befestigungsbolzen (10b) eingreifen kann, und einer vorderen Führungskulisse (20a) zur Abstützung des Fahrzeugsitzes auf einem vorderen Befestigungsbolzen (10a) sowie einem drehbar gelagerten, von einer Federkraft beaufschlagten, klauenartigen vorderen Verriegelungselement (3a, 3'a), das den vorderen Befestigungsbolzen (10a) in der Führungskulisse (20a) arretiert, wobei dem hinteren Befestigungsbolzen (10b) ein schwenkbar gelagertes, klauenartiges, von einer Federkraft entgegen der Verriegelungsposition beaufschlagtes Primär-Verriegelungselement (3b) zugeordnet ist, dessen Lage bei Erreichen der Verriegelungsposition durch ein Sekundär-Verriegelungselement (4) ebenfalls verriegelbar ist,
**dadurch gekennzeichnet,**
daß das vordere Verriegelungselement (3a, 3a') und das hintere Sekundär-Verriegelungselement (4) durch ein Koppelelement (5) derart miteinander verbunden sind, daß die auf das vordere Verriegelungselement (3a, 3a') wirkende Federkraft zu dem Sekundär-Verriegelungselement (4) weiterleitbar ist und das vordere Verriegelungselement (3a, 3a') erst betätigbar ist, wenn das Primär-Verriegelungselement (3b) seine Verriegelungsposition erreicht hat.

2. Vorrichtung nach Anspruch 1, **dadurch gekennzeichnet,** daß das Primär-Verriegelungselement (3b) zwei Anschläge (33b, 34b) aufweist, die eine Klaue zur Aufnahme des hinteren Befestigungsbolzens (10b) bilden.

3. Vorrichtung nach wenigstens einem der voranstehenden Ansprüche, **dadurch gekennzeichnet,** daß das Sekundär-Verriegelungselement (4) von einer Federkraft in Richtung seiner Verriegelungsposition beaufschlagt ist.

4. Vorrichtung nach wenigstens einem der voranstehenden Ansprüche, **dadurch gekennzeichnet,** daß an das Primär-Verriegelungselement (3b) ein erster Kurvenabschnitt (31b) angeformt ist, gegen den ein erster Anschlag (41) des Sekundär-Verriegelungselements (4) anschlägt, solange der Befestigungsbolzen (10b) noch nicht seine Verriegelungsposition innerhalb der Kulisse (20b) des Befestigungshakens (2b) erreicht hat, und daß bei Erreichen der Verriegelungsposition das federkraftbeaufschlagte Sekundär-Verriegelungselement (4) mit einem Kurvenabschnitt (42) in Opposition zu einem zweiten Kurvenahschnitt (32b) des Primär-Verriegelungselements (3b) schwenkt und dadurch die Position des Befestigungsbolzens (10b) in Fahrtrichtung verriegelt.

5. Vorrichtung nach wenigstens einem der voranstehenden Ansprüche, **dadurch gekennzeichnet,** daß als Koppelelement eine stange (5) zur Anwendung kommt, deren eines Ende über eine Einhängung (43) mit dem Sekundär-Verriegelungselement (4) und deren anderes Ende über eine Einhängung (310) mit dem vorderen Verriegelungselement (3a) über einen daran angeformten Arm (31a) in Verbindung steht.

6. Vorrichtung nach wenigstens einem der voranstehenden Ansprüche, **dadurch gekennzeichnet,** daß eine Feder (36a) vorgesehen ist, die sowohl die Schwenkbewegung des vorderen Verriegelungselements (3a) als auch des Sekundär-Verriegelungselements (4) bewirkt.

7. Vorrichtung nach Anspruch 6, **dadurch gekennzeichnet,** daß die Feder (36a) an dem Arm (31a) des vorderen Verriegelungselements (3a) angreift.

8. Vorrichtung nach Anspruch 6, **dadurch gekennzeichnet,** daß die Feder in der Nähe der hinteren Verriegelung an der Koppelstange (5) angreift und diese in Richtung der hinteren Verriegelung beaufschlagt.

9. Vorrichtung nach wenigstens einem der voranstehenden Ansprüche, **dadurch gekennzeichnet,** daß dem vorderen Verriegelungselement (3'a) ein Sperrelement (6) zugeordnet ist, das ein Schwenken des Verriegelungselements (3'a) in die Verriegelungsposition solange verhindert, bis der vordere Befestigungsbolzen (10a) in die vordere Führungskulisse (20a) eingreift.

10. Vorrichtung nach Anspruch 9, **dadurch gekennzeichnet,** daß das Sperrelement (6) in Sperrstellung den Verriegelungsbereich der vorderen Führungskulisse (20a) zumindest teilweise überdeckt und schwenkbar in einer Achse (60) lagert, wobei das der Achse gegenüberliegende freie Ende einen Kurvenabschnitt (62), der einem Anschlag (34a) des Verriegelungselements (3'a) axial entgegengerichtet ist, und eine Nase (61), die den Schwenkbereich des Sperrelements (6) durch Eingriff mit dem Anschlag (34a) begrenzt, aufweist.

11. Vorrichtung nach den Ansprüchen 9 und 10, **dadurch gekennzeichnet,** daß das Sperrelement (6) von einer Feder (63) entgegen der Verriegelungsvorrichtung (in Richtung der vorderen Kulisse 20a) beaufschlagt ist.

## Claims

1. Device for the detachable connection of a vehicle seat to the vehicle floor with a rear open fixing hook (2b) in which a fixing bolt (10b) fixed on the vehicle floor can engage, and a front slide guide (20a) for supporting the vehicle seat on a front fixing bolt (10a) as well as a rotatably mounted claw-like front locking element (3a,3'a) biased by a spring force to lock the front fixing bolt (10a) in the slide guide (20a) wherein the rear fixing bolt (10b) is associated with a swivel mounted claw-like primary locking element (3b) which is biased by a spring force against the locking position wherein the position of the primary locking element on reaching the locking position can likewise be locked by a secondary locking element (4),
**characterised in that**
the front locking element (3a, 3a') and the rear secondary locking element (4) are connected together by a coupling element (5), in that the spring force acting on the front locking element (3a, 3a') is transmitted to the secondary locking element (4) and the front locking element (3a, 3a') can only be operated when the primary locking element (3b) has reached its locking position.

2. Device according to claim 1 **characterised in that** the primary locking element (3b) has two stops (33b, 34b) which form a claw for holding the rear fixing bolt (10b).

3. Device according to at least one of the preceding claims, **characterised in that** the secondary locking element (4) is biased by a spring force in the direction of its locking position.

4. Device according to at least one of the preceding claims, **characterised in that** a first curved section (31b) is moulded on the primary locking element (3b) against which a first stop (41) of the secondary locking element (4) stops so long as the fixing bolt (10b) has still not reached its locking position inside the slide guide (20b) of the fixing hook (2b) and that on reaching the locking position the spring-tensioned secondary locking element (4) swivels with its curved section (42) in opposition to a second curved section (32b) of the primary locking element (3b) and thereby locks the position of the fixing bolt (10b) in the travel direction.

5. Device according to at least one of the preceding claims **characterised in that** a rod (5) is used as the coupling element whose one end is connected through a suspension mounting (43) to the secondary locking element (4) and whose other end is connected by a suspension mounting (310) to the front locking element (3a) through an arm (31a) formed thereon.

6. Device according to at least one of the preceding claims **characterised in that** a spring (36a) is provided which causes the swivel movement of both the front locking element (3a) and the secondary locking element (4).

7. Device according to claim 6 **characterised in that** the spring (36a) engages on the arm (31a) of the front locking element (3A).

8. Device according to claim 6 **characterised in that** the spring engages near the rear locking on the coupling rod (5) and biases this in the direction of the rear locking.

9. Device according to at least one of the preceding claims, **characterised in that** a blocking element (6) is associated with the front locking element (3'a) and prevents a swivelling of the locking element (3'a) into the locking position so long as the front fixing bolt (10) engages in the front slide guide (20a).

10. Device according to claim 9 **characterised in that** the blocking element (6) in the blocking position covers the locking area of the front slide guide (20a) at least in part and is mounted for swivel movement in an axis (60) wherein the free end opposite the axis has a curved section (62) which is directed axially against a stop (34a) of the locking element (3'a), and a nose (61) which restricts the swivel area of the blocking element (6) through engagement with the stop (34a).

11. Device according to claims 9 and 10 **characterised in that** the locking element (6) is biased by a spring (63) against the locking device (in the direction of the front slide guide 20a).

## Revendications

1. Dispositif de liaison amovible d'un siège de véhicule au plancher dudit véhicule, comprenant un crochet postérieur de fixation (2b) de type ouvert, dans lequel peut pénétrer un boulon de fixation (10b) situé côté plancher du véhicule, et une coulisse antérieure de guidage (20a) en vue de l'appui du siège du véhicule sur un boulon antérieur de fixation (10a), ainsi qu'un élément antérieur de verrouillage (3a, 3'a) du type griffe, monté à rotation, sollicité par une force élastique et arrêtant le boulon antérieur de fixation (10a) dans la coulisse de guidage (20a) dispositif dans lequel est affecté, au boulon postérieur de fixation (10b), un élément de verrouillage primaire (3b) du type griffe, monté à pivotement, sollicité par une force élastique en sens inverse de la position de verrouillage, et dont la position est pareillement verrouillable par un élément de verrouillage secondaire (4) lorsque la position de verrouillage est atteinte,
caractérisé par le fait
que l'élément antérieur de verrouillage (3a, 3a') et l'élément postérieur de verrouillage secondaire (4) sont reliés l'un à l'autre par un élément d'accouplement (5) de telle sorte que la force élastique agissant sur l'élément antérieur de verrouillage (3a, 3a') puisse être transmise à l'élément de verrouillage secondaire (4), et que l'élément antérieur de verrouillage (3a, 3a') ne puisse ètre actionné que lorsque l'élément de verrouillage primaire (3b) a atteint sa position de verrouillage.

2. Dispositif selon la revendication 1, caractérisé par le fait que l'élément de verrouillage primaire (3b) présente deux butées (33b, 34b) formant une griffe pour recevoir le boulon postérieur de fixation (10b).

3. Dispositif selon au moins l'une des revendications précédentes, caractérisé par le fait que l'élément de verrouillage secondaire (4) est sollicité, par une force élastique, en direction de sa position de verrouillage.

4. Dispositif selon au moins l'une des revendications précédentes, caractérisé par le fait qu'un premier segment de came (31b) est façonné d'un seul tenant sur l'élément de verrouillage primaire (3b), segment contre lequel une première butée (41) de l'élément de verrouillage secondaire (4) s'applique aussi longtemps que le boulon de fixation (10b) n'a pas encore atteint sa position de verrouillage à l'intérieur de la coulisse (20b) du crochet de fixation (2b) ; et par le fait que, lorsque la position de verrouillage est atteinte, l'élément de verrouillage secondaire (4) sollicité par une force élastique pivote, par un segment de came (42), en opposition vis-à-vis d'un second segment de came (32b) de l'élément de verrouillage primaire (3b), et verrouille ainsi la position du boulon de fixation (10b) dans la direction de déplacement.

5. Dispositif selon au moins l'une des revendications précédentes, caractérisé par le fait qu'on utilise, en tant qu'élément d'accouplement, une tige (5) dont l'une des extrémités est en liaison avec l'élément de verrouillage secondaire (4) par l'intermédiaire d'un système d'accrochage (43), et dont l'autre extrémité est en liaison avec l'élément antérieur de verrouillage (3a) par l'intermédiaire d'un système d'accrochage (310), au moyen d'un bras (31a) qui y est ménagé d'un seul tenant.

6. Dispositif selon au moins l'une des revendications précédentes, caractérisé par le fait qu'il est prévu un ressort (36a) provoquant le mouvement pivotant tant de l'élément antérieur de verrouillage (3a), que de l'élément de verrouillage secondaire (4).

7. Dispositif selon la revendication 6, caractérisé par le fait que le ressort (36a) vient en prise avec le bras (31a) de l'élément antérieur de verrouillage (3a).

8. Dispositif selon la revendication 6, caractérisé par le fait que le ressort vient en prise avec la tige d'accouplement (5) à proximité du verrouillage postérieur, et sollicite ladite tige en direction dudit verrouillage postérieur.

9. Dispositif selon au moins l'une des revendications précédentes, caractérisé par le fait que l'élément antérieur de verrouillage (3'a) est affecté à un élément de blocage (6) empêchant un pivotement de l'élément de verrouillage (3'a), vers la position de verrouillage, aussi longtemps que le boulon antérieur de fixation (10a) pénètre dans la coulisse antérieure de guidage (20a).

10. Dispositif selon la revendication 9, caractérisé par le fait que, en position de blocage, l'élément de blocage (6) recouvre au moins partiellement la zone de verrouillage de la coulisse antérieure de guidage (20a), et est monté à pivotement dans un axe (60), l'extrémité libre, située en vis-à-vis de l'axe, comprenant un segment de came (62) dirigé axialement à l'opposé d'une butée (34a) de l'élément de verrouillage (3'a), et un mentonnet (61) qui limite la plage de pivotement de l'élément de blocage (6) par venue en prise avec la butée (34a).

11. Dispositif selon les revendications 9 et 10, caractérisé par le fait que l'élément de blocage (6) est sollicité, par un ressort (63), en sens inverse du dispositif de verrouillage (dans la direction de la coulisse antérieure 20a).
